Europäisches Patentamt

(19) European Patent Office

Office européen des brevets

(11) Publication number: **0 322 381**
A2

# EUROPEAN PATENT APPLICATION

(21) Application number: 88830553.9

(22) Date of filing: 21.12.88

(51) Int. Cl.4: **E 04 B 1/90**
E 04 B 1/86, B 32 B 13/14,
B 32 B 13/02

(30) Priority: 23.12.87 IT 2294387

(43) Date of publication of application:
28.06.89 Bulletin 89/26

(84) Designated Contracting States: **CH DE ES FR LI**

(71) Applicant: **T.C.R. S.r.l.**
**Via Buozzi, 15**
**Lecco (Como) (IT)**

(72) Inventor: **Porchi, Francesco**
**Via Caldone, 41**
**Lecco (Como) (IT)**

(74) Representative: **Aimi, Luciano et al**
**c/o Società Italiana Brevetti S.p.A. Via Carducci 8**
**I-20123 Milano (IT)**

(54) Composite sound-deadening structure for the building industry.

(57) Composite structures for the building industry comprising three- or more-layered reduced thickness self-supporting boards or walls, wherein the two outer layers (1) are made of rigid material, such as wood-cement conglomerate, while the inner mat(s) (2) is (are) made of inorganic honeycomb material, possibly having sheets (3) made for instance of bituminous material interposed therewithin.

Walls built with these structures have a high sound-deadening power, and are highly fireproof while being of low overall thickness.

Fig. 5

EP 0 322 381 A2

Description

## COMPOSITE SOUND-DEADENING STRUCTURE FOR THE BUILDING INDUSTRY

This invention relates to a composite sound-deadening structure for the building industry, and in particular to a three- or more-layered reduced thickness board or wall, having a high sound-deadening and fireproof power. In our industrialized era, the problem of protection from noise has been dealt with in various ways, by working both on the harmful noise sources in order to try and reduce noise emissions from said sources, and on the noise propagation processes from the source to the affected environment which is meant to be protected. While noise emission reduction at the source is the most desirable measure and the most functional when feasible, it is nevertheless the most difficult to implement, in that it often requires to work on factors very difficult to control.

Therefore, the only available means to reduce noise-generated disturbances is to work on noise propagation, by providing suitable barriers between noise sources and the environment to be protected. Thus, the usual practice is to resort to sound-deadening materials for structure linings and in particular, when the noise sources are located outside of the environment to be protected, to various means which predominantly come down to providing air spaces or inserting honeycomb materials inside the building structure. Thus for instance use is made of wall-board products comprising boards or slabs made out of concrete whose weight is possibly reduced by conglomeration with pumice. or out of cement-asbestos, out of plaster and a filler possibly with reinforcing bars, out of a wood and cork conglomerate, out of pulp, and so on. However, the above products, besides requiring quite large thicknesses, in general are not self-supporting, and allow only for a limited noise reduction.

Now it has been found that composite structures comprising two parallel boards made out of a particular wood-cement conglomerate having high sound-deadening properties, and including suitable sound-proof or sound-deadening materials in the intermediate cavity, may be used to build structural walls of a particularly reduced thickness, but having a high sound-deadening power together with a high mechanical and fireproof strength.

The composite structures thus provided, which are the subject of this invention will be described more particularly in the following referring to the attached drawings, wherein:

Figure 1 shows the cross section of a first embodiment of a sound-deadening wall according to this invention;

Figure 2 is a plot of the sound-deadening power of the wall shown in Figure 1, measured in decibels, versus noise frequency;

Figure 3 shows the cross-section of a second embodiment of a sound-deadening wall;

Figure 4 is a plot of the sound-deadening power of the wall of Figure 3;

Figure 5 is a cross section of a third embodiment of a sound-deadening wall according to this invention;

Figure 6 is a plot similar to the previous ones, wherein the sound-deadening power of the wall of Figure 5 is shown.

Figure 7 is a cross section of a further embodiment of sound-deadening wall; and

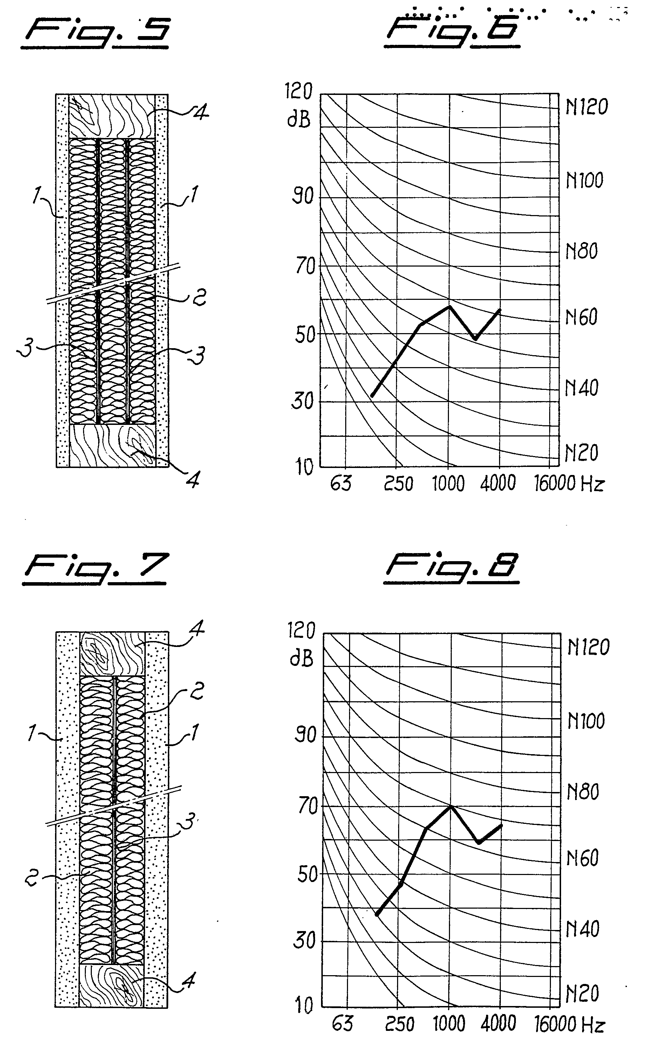

Figure 8 is a plot which shows, in decibels, the soud-deadening power of the wall of Figure 7.

As it is shown in the drawing, the inventive board or wall substantially comprises two wood-cement walls 1 spaced apart a short distance from each other, and parallel to each other, and an inner mat 2 of mineral wool. Where a higher sound-deadening action is needed, without increasing the overall thickness, within the mineral fiber mat 2 whose thickness is larger than that of the two slabs 1, there is inserted one or more sheets 3 of a material having a high specific gravity. Slabs 1 comprising the outer structure of the board or wall of this invention are made of a mixture of wood and cement suitably bound by means of thermosetting binders, and the honeycomb type intermediate material comprising layer 2 is a mineral wool, as for instance rock wool or fiber glass processed with thermosetting phenolic resins, or else a natural or synthetic textile material, while intermediate sheets 3, when used, are comprised of an oxydized bituminous material, plastic materials, laminated materials, lead contaning rubber, high specific gravity cement material, and so on. After members 2 and 3 have been introduced, outer slabs 1 are fastened together by means of an outer peripheral frame 4 made of high density wood-concrete mixture which, besides providing for containment of the multiple intermediate layers, fastens and stabilizes the final wall or board, as an integral member.

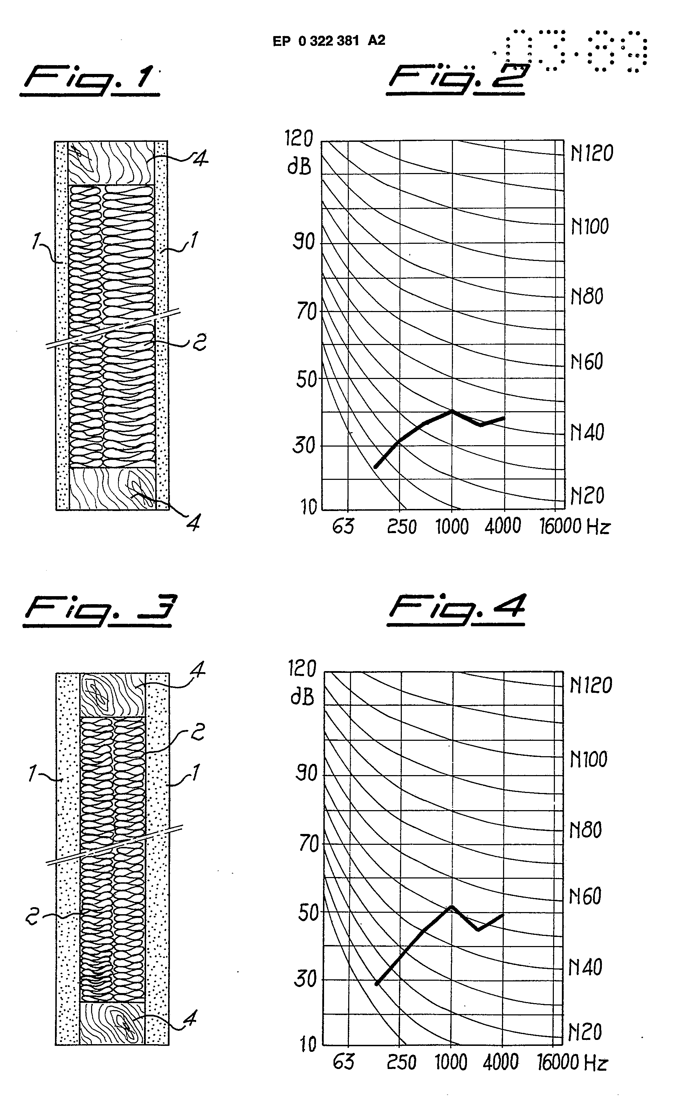

The preferred thickness of the self-supporting and sound-deadenng wall of this invention is 8.5 cm. and with such a thickness a sound-deadening effect ranging from 24 all the way up to 70 decibels is made possible, over the whole range of frequencies. More particularly, referring to the wall shown in Figure 1, outer wood-cement conglomerate slabs 1 have a 1 cm thickness each, while intermediate mineral wool layer 2 has a 6.5 cm total thickness, with a 50 kg/m$^3$ density, and the sound proofing achivable by means of said wall ranges from about 24 to 40 decibels according to the frequency considered. The mechanical properties of a wall according to Figure 1 are listed in the following Table 1.

## TABLE 1

| Weight | Kg/m² | 29 approx. |
|---|---|---|
| Modulus of Elasticity | Kg/cm² | 30450 " |
| Bending Strength | Kg/cm² | 120 " |
| Transverse Rupture Strength | Kg/cm² | 10 " |
| Compression Strength | Kg/cm² | 100 " |
| Screw Pulling Strength | Kg/cm thck. | 80 " |
| Nail Pulling Strength | Kg/cm thck. | 15 " |

In the case of the wall of Figure 3, the slab thickness is approximately 1.8 cm each, and layer 2 is about 5 cm thick; the noise reduction obtained by this arrangement ranges from about 28 to about 52 decibels, according to the particular frequency. The mechanical properties of the wall shown in Figure 3 are listed in the following Table 2.

The wall shown in Figure 5 still includes two outer

## TABLE 2

| Weight | Kg/m² | 48 approx. |
|---|---|---|
| Modulus of Elasticity | Kg/cm² | 30750 " |
| Bending Strength | Kg/cm² | 130 " |
| Transverse Rupture Strength | Kg/cm² | 12 " |
| Compression Strength | Kg/cm² | 202 " |
| Screw Pulling Strength | Kg/cm thck. | 145 " |
| Nail Pulling Strength | Kg/cm thck. | 27 " |

boards each 1 cm thick; but the intermediate cavity is filled with three 2 cm thick mineral wool mats having a density of 60 Kg/m³ and two bituminous laminate layers 3 about 3.5 mm thick each interposed between the above mats; in this case the noise reduction effect ranges from about 32 to about 59 decibels, according to the frequency range, while the mechanical properties of the wall of Figure 5 are listed in the following Table 3.

## TABLE 3

| Weight | Kg/m² | 42 approx. |
|---|---|---|
| Modulus of Elasticity | Kg/cm² | 32700 " |
| Bending Strength | Kg/cm² | 142 " |
| Transverse Rupture Strength | Kg/cm² | 13 " |
| Compression Strength | Kg/cm² | 204 " |
| Screw Pulling Strength | Kg/cm thck. | 80 " |
| Nail Pulling Strength | Kg/cm thck. | 15 " |

The last embodiment of a wall according to this invention (Figure 7) includes two outer slabs 1 each about 1.8 cm thick, and two mineral wool inner mats 2, 2 and 2.5 cm thick, separated by an approximately 3.5 mm thick bituminous laminate sheet 3; the noise reduction effect obtained by means of such a structure ranges from about 35 to about 69 decibels, according to the frequency range. The mechanical properties of the wall of Figure 7 are listed in the following Table 4.

## TABLE 4

| Weight | Kg/m² | 54 approx. |
|---|---|---|
| Modulus of Elasticity | Kg/cm² | 32850 " |
| Bending Strength | Kg/cm² | 139 " |
| Transverse Rupture Strength | Kg/cm² | 13 " |
| Compression Strength | Kg/cm² | 216 " |
| Screw Pulling Strength | Kg/cm thck. | 145 " |
| Nail Pulling Strength | Kg/cm thck. | 27 " |

Thus, the walls according to this invention have very high sound-deadening properties and may be used both for floor area partitioning for shaping rooms in houses, hotels, recreational, school or manufacturing buildings, or for social activity buildings in general, and for the sound proofing of existing masonry walled rooms, as a second lining wall to be applied to the existing walls and, unlike the usually adopted solutions such as the various types of boardings or plaster boards used in the building industry, they make it possible to reach sound-deadening effects ranging from 24 to 70 decibels, according to frequency range, always using a total thickness of only 8.5 cm, by means of an arrangement of materials suitably sized and associated together according to noise control requirements. Owing to a latching system between individual modules, by means of male and female fastenings, the inventive walls, once they have been inserted within "C" sections previously fastened to the floor by means of vibration suppressing grommets, are ready for a treatment to be performed on the seams, in order to make them perfectly continuous and similar to a unitary wall, advantageously no smoothing treatment being required in preparation for the finishing treatment which may be whatsoever, like plastic material plastering, wallpaper, tiles, ceramics or painting. For fastening to existing floor slabs suitable expansion joints are provided which, ensure the necessary independence of the wall board from possible stress due to floor slab deflections, whereby integrity is ensured both for the wall assembly and for the materials applied during finishing operations.

The inventive wall boards can be mounted with high savings in terms of assembly time, summing up to about two thirds compared to regular building time, and they may be thoroughly reused after disassembly and new surface finishing operations. Also from a building systems standpoint the walls have positive advantages, in that they can house conduits provided on purpose for laying electrical wires and pipes.

Another feature of the inventive sound-deadening walls is a high degree of thermal insulation and fireproofing, a very satisfactory mechanical strength and a particular ability to accept nails and/or grommets for hanging pictures, shelves and so on.

The doors which have to be installed on the inventive walls in order to give acces to the rooms enclosed by the partitions, are made with the same system and using the same partition materials.

Therefore, the wall boards of this invention may be used also in other fields such as for instance the automobile industry, with applications such as sound proofing of an engine test room, or the shop area where soundproof booths have to be provided, and in the building of sound barriers.

**Claims**

1. A sound-deadening structure for the building industry substantially comprising two outer slabs (1) and an intermediate honeycomb mat (2) characterized in that the outer slabs (1) are a wood-cement conglomerate and the intermediate honeycomb mat (2) is made of mineral wool whose density ranges from 50 to 60 Kg/m$^3$.

2. The sound-deadening structure of Claim 1, characterized in that the thickness of said intermediate sound-deadening honeycomb material mat (2) is higher than the overall thickness of said pair of outer slabs (1).

3. The sound-deadening structure of Claim 2, charaterized in that said intermediate sound-deadening honeycomb material mat (2) has interposed therewithin one or more sheets (3) of a high specific gravity material.

## Fig.1

## Fig.2

## Fig.3

## Fig.4

## Fig. 5

## Fig. 6

## Fig. 7

## Fig. 8